# EUROPÄISCHE PATENTANMELDUNG

(11) **EP 0 563 923 A2**
(43) Veröffentlichungstag der Anmeldung: **06.10.1993**
(21) Anmeldenummer: 93105343.3
(22) Anmeldetag: 31.03.1993
(51) Int. Cl.: G01L 5/28

(54) **Bremssystem-Prüfgerät**

(30) Priorität: 01.04.1992 DE 4210673
(71) Anmelder: SIHI GmbH & Co KG, D-25524 Itzehoe (DE)
(72) Erfinder: Zimmermann, Erwin, 2211 Heiligenstedten (DE); Herbst, Thomas, 2000 Hamburg 20 (DE)
(74) Vertreter: Glawe, Delfs, Moll & Partner

(57) **Zusammenfassung**

Die Erfindung bezieht sich auf eine Vorrichtung zum Setzen der Bauteile und zum Überprüfen der Funktionssicherheit von Bremssystemen an Kraftfahrzeugen am laufenden Montageband. Mit einem pneumatisch betätigtem Hubkolben (1, 2) wird das Bremspedal im Fahrzeug mehrfach betätigt und dabei Druck, Kraft und Weglänge gemessen, die die gewünschte Überprüfung ermöglichen. Die Übertragung der von der Vorrichtung ermittelten Daten erfolgt dabei drahtlos an außerhalb des auf dem laufenden Band befindlichen Fahrzeuges installierte Empfangsgeräte mit dahintergeschalteten Datenverarbeitungssystemen zur Aufnahme und Verarbeitung der übermittelten Daten.

## Beschreibung

Die Erfindung bezieht sich auf eine Vorrichtung zum Setzen der Bauteile und zur Überprüfung der Funktionssicherheit eines Bremssystemes an Kraftfahrzeugen am laufenden Montageband.

Als Setzen wird der Vorgang bezeichnet, durch den nach abgeschlossener Montage eines Bremssystemes dafür gesorgt wird, daß die Teile des Systemes, wie z.B. O-Ringe oder Kolben, in den Radbremszylindern einschließlich Bremsbelege und -scheiben durch mehrfache Betätigung des Bremspedales in die endgültige Betriebsposition gerückt werden. Weiterhin dienen diese Vorrichtungen dazu, die Funktionssicherheit und die Dichtigkeit des gesamten Systemes zu überprüfen, beispielsweise Luft im Bremssystem, Lecks (von großen Lecks bis zu Sickerlecks) oder eine falsche Montage des Bremspedales bzw. eine fehlerhafte Einstellung desselben zu erkennen. Das erfolgt durch Messung der Kraft, mit der das Bremspedal gedrückt wird, durch Messung und Überprüfung des Hubkolbenstangen- respektive Bremspedalweges und durch die Ermittlung des Kontaktpunktes zwischen Bremspedal und Vorrichtung. Bei bekannten Ausführungen solcher Prüfvorrichtungen erfolgt die Energieversorgung und die Meßdaten- übermittlung mittels fest installierter Leitungen und/oder Schläuche zwischen der in dem auf dem Band laufenden Fahrzeug angebrachten Vorrichtung und einer stationären Einrichtung zur Energieversorgung und zur Auswertung der Meßergebnisse.

Wegen des laufenden Bandes müssen diese Zuführungen elastisch bzw. mobil installiert werden und so ausgerüstet sein, daß sie dem mit dem laufenden Montageband bewegten Fahrzeug folgen können. Diese Installation ist aufwendig und bewirkt darüber hinaus, daß durch die nach außen führenden Versorgungs- und Meßdatenübertragungsleitungen weitere Arbeiten an dem auf dem Band laufenden Fahrzeug behindert werden.

Aufgabe der Erfindung ist es, eine Vorrichtung zu schaffen, die die genannten Mißstände nicht aufweist und platz- und raumsparend untergebracht werden kann.

Erfindungsgemäß wird diese Aufgabe durch die Merkmale des Anspruchs 1 gelöst.

Durch den Druckspeicher und den Akkumulator ist die Energieversorgung der Vorrichtung sichergestellt, und die Übertragung der ermittelten Daten erfolgt leitungsfrei an einen außerhalb des Fahrzeuges angeordneten Empfänger. In diesem System sind also keine festen Verbindungsleitungen zwischen der Vorrichtung und einem außerhalb des Fahrzeuges auf dem laufenden Band angeordnetem Datenaufnahme- und Verarbeitungssystem notwendig und können daher auch nicht störend für möglicherweise weitere Arbeiten an dem laufenden Montageband wirken.

Zu den aufzunehmenden Meßdaten gehört u.a. der Bewegungsweg des Bremspedals bei den einzelnen Betätigungsschritten, und es wird erfindungsgemäß vorgeschlagen, zu diesem Zweck die Hubkolbenstange hohl auszubilden und innerhalb der Bohrung ein Wegemeßsystem zu integrieren.

Besonders günstig ist es, wenn zur Messung des Hubweges der Hubkolbenstange eine Widerstandsmeßstrecke mit fest angeordnetem, an der Bohrungswand gleitendem Abnehmer angeordnet ist. Durch die Erfassung der Wege der Hubkolbenstange läßt sich erkennen, ob in dem zu prüfenden Bremssystem Luft vorhanden ist, die sich in einem zu großen Weg der Hubkolbenstange bzw. des zu betätigenden Bremspedals auswirkt.

Zweckmäßigerweise ist es weiterhin, im Hubkolbenstangenkopf eine Kraft- bzw. Druckmeßeinrichtung und einen Berührungskontaktschalter zu installieren. Damit läßt sich zum einen der Kontaktpunkt zwischen Bremspedal und Vorrichtung erfassen und somit die richtige Pedaleinstellung überprüfen und zum anderen über eine während einer bestimmten Zeitperiode andauernde Druckbelastung und gleichzeitige Hubkolbenwegkontrolle die Dichtheit des Systemes überprüfen.

Da es darüber hinaus notwendig ist, die Hubanzahl und auch die Zeitdauer der Hubvorgänge programmiert zu steuern, ist erfindungsgemäß vorgesehen, eine programmierbare Steuerungseinrichtung in die Vorrichtung zu integrieren. Zum Setzen der Bauteile ist es notwendig, mehrfach den Hubvorgang auszuführen, vorzugsweise drei- oder viermal, wobei während dieser Phase eine Überprüfung der Weg- und Kraft- bzw. Druckwerte nicht notwendig ist. Es soll daher durch die programmierbare Steuerungseinrichtung möglich sein, diese Abläufe, und anschließend den Beginn und Ablauf der Meßphase programmgemäß zu steuern.

Als besonders vorteilhaft hat es sich auch erwiesen, die Magnetventile zur Steuerung der Pneumatik innerhalb der Prüfvorrichtung als Mehrwegeventile auszubilden, die auf geringstem Raum relativ viele und einfache Steuerungsmöglichkeiten bieten.

Erfindungsgemäß wird weiter vorgeschlagen, zwischen Druckluftvorrats- und -arbeitsraum ein Druckminderventil anzuordnen, das in Strömungsrichtung gesehen vor den Mehrwegeventilen sitzt. man erreicht hierdurch eine gleichmäßigere Druckbeaufschlagung des Kolbens und darüber hinaus auch eine gleichmäßigere Bewegung der Hubstange.

Um eindeutige Ergebnisse zu erzielen und Fehler auszuschließen, wird weiter vorgeschlagen, in die Vorrichtung Meßumformer für die Meßsensoren zu integrieren. Einmal benötigte man diese Meßumformer zur Umsetzung gemessener Daten in Spannungssignale und darüber hinaus noch zur Verstärkung dieser Spannungssignale, um eine eindeutige drahtlose Übermittlung an die außerhalb des Wagens angeordneten Empfänger und Datenverarbeitungsgeräte zu gewährleisten.

Als vorteilhaft hat es sich weiterhin erwiesen, außerhalb des Fahrzeuges einen Richtempfänger anzuordnen. Dadurch wird es möglich, die übermittelten Daten jeweils einem ganz bestimmten auf dem Band befindlichen Wagen zuzuordnen. Insbesondere ist dieses dann notwendig, wenn an zwei oder mehr Fahrzeugen gleichzeitig solche Bremssystemprüfungen durchgeführt werden.

Als besonders einfach und auch raumsparend bietet sich erfindungsgemäß an, die beiden Empfänger ortsfest anzuordnen.

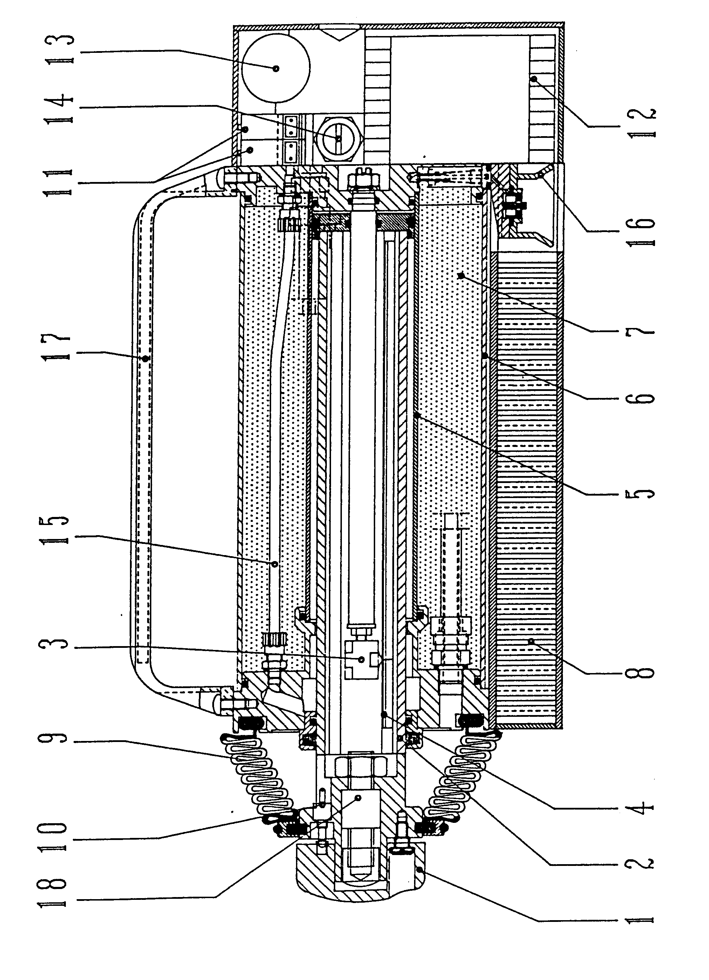

Die Erfindung ist beispielsweise erläutert anhand der beigefügten Zeichnung.

Die Zeichnung selbst zeigt einen Längsschnitt durch die Vorrichtung. Gezeigt ist das wesentliche Bauteil der Vorrichtung, das zum festen und ortsgenauen Einsetzen in das Fahrzeug mit weiteren Teilen, beispielsweise einem festen Rahmen, versehen ist, der in den Wagen mit dem zu testenden Bremssystem fest eingefügt wird.

Der Hubstangenkopf 1, mit dem das Bremspedal betätigt wird, ist auf die Hubstange 2 aufgesetzt, die hohl ausgebildet ist und in der der fest installierte Abnehmer 3 sowie die mit der inneren Hubkolbenwand verbundene Widerstandsmeßstrekke 4 installiert sind.

Umgeben ist die Hubstange von einem inneren Mantel 5 und einem äußeren Mantel 6, zwischen denen der Raum 7 als Druckspeicher für die zur Betätigung des Kolbens notwendige Druckluft vorgesehen ist.

Die zur elektrischen Versorgung der Einheit notwendige Energie liefert der Akkumulator 8. Der bewegliche Hubkolbenstangenkopf und das Vorrichtungsgehäuse sind durch den Faltenbalg 9 elastisch miteinander verbunden. Ein Berührungskontaktschalter 10 spricht an, wenn eine Kraft über den Hubstangenkopf übertragen wird. Dadurch kann der Ort des anfänglichen Kontakts zwischen Bremspedal und Hubstangenkopf festgestellt werden, wodurch eine Kontrolle der richtigen Stellung des Bremspedals möglich ist.

Über die Mehrwegeventile 11 wird die Zuführung der Druckluft aus dem Druckspeicher 7 zu dem Kolben der Hubstange, die Druckluftzufuhr über den Kanal 15 für die Rückfahrbewegung der Hubstange und das Abblasen der Druckluft aus dem Kolbenraum bzw. dem Raum zwischen der Hubkolbenstange und dem Mantel 6 nach außen gesteuert. Mit 14 ist ein Druckminderventil bezeichnet, das zwischen dem Druckluftvorratsraum 7 und dem Arbeitsraum vorzugsweise in Strömungsrichtung vor den Mehrwegeventilen eingebaut ist. Zur Ermittlung der auf die Kolbenstange wirkenden Kräfte ist im Hubstangenkopf ein Kraftaufnehmer 18 vorgesehen. Im Steuerblock 12 sind die früher erwähnten, programmierbaren Steuerungselemente vorgesehen und ggf. auch die Meßumformer für die Meßsensorik. Letztere können aber auch in den Sender 13 integriert sein, der die von der Vorrichtung aufgenommenen Daten drahtlos an eine außerhalb des auf dem Montageband laufenden Fahrzeuges installierte und fest angeordnete Empfangseinheit sendet, hinter die ein entsprechendes Datenverarbeitungsgerät zur Aufnahme und Verarbeitung der übermittelten Daten geschaltet ist. Bei der dargestellten Ausführungsform ist darüber hinaus in den Traggriff 17 der Vorrichtung eine mit dem Sender 13 gekoppelte Antenne integriert.

In vielen Fällen genügt es, lediglich einen stationären Rundumempfänger vorzusehen. Das gilt auch dann, wenn mehrere Vorrichtungen in verschiedenen Fahrzeugen gleichzeitig tätig sind, weil deren Signale durch unterschiedliche Kodierung (beispielsweise unterschiedliche Frequenzen) voneinander unterschieden werden können. Stattdessen kann die Zuordnung der Aufzeichnungen zu den einzelnen Vorrichtungen bzw. Fahrzeugen auch dadurch geschehen, daß mehrere jeweils auf eine Vorrichtung sich einstellende Richtempfänger vorgesehen sind.

Eine besonders vorteilhafte Ausführungsform zeichnet sich dadurch aus, daß ein Rundumempfänger zum Empfang der Signale aller Vorrichtungen vorgesehen ist und daß zusätzlich ein Richtempfänger stationär auf eine bestimmte Identifizierungsstelle des Montagebands gerichtet ist, so daß jeweils dann, wenn eine Vorrichtung die Identifizierungsstelle durchläuft, der Richtempfänger anspricht. Diese Identifizierungsstelle befindet sich zweckmäßigerweise beim Einlauf des Bandes in denjenigen Bereich, in welchem die Vorrichtungen den Fahrzeugen in der Reihenfolge entnommen werden, in welcher die Fahrzeuge in diesem Bereich einlaufen. Es kann dann jeweils ein Protokoll (beispielsweise automatisch veranlaßt durch das Ansprechen des Richtempfängers) ausgedruckt werden, das problemlos der zugehörigen Vorrichtung zugeordnet werden kann.

Die Vorrichtung wird in der folgenden Weise benutzt. Sie wird an beliebiger Stelle im Empfangsbereich des Rundumempfängers in ein Fahrzeug eingesetzt und von Hand eingeschaltet. Alternativ kann auch eine Fernsteuerung vorgesehen sein. Nach einer für die Durchführung der Testvorgänge ausreichenden Zeitdauer wird die Vorrichtung wieder entnommen und zwar unmittelbar im Anschluß an die Identifikationsstelle, der der Protokollausdruck zugeordnet ist. Da die Identifizierung der Vorrichtungen und Fahrzeuge im Anschluß an die Teststrecke erfolgt, ist es nicht erforderlich, die Vorrichtungen getreu der Fahrzeugreihenfolge einzusetzen.

## Patentansprüche

1. Vorrichtung zum Setzen der Bauteile und zur Überprüfung der Funktionssicherheit eines Bremssystemes an Kraftfahrzeugen am laufenden Montageband, die mit einer pneumatisch betätigten Hubkolbenstange zur Betätigung des Bremspedals oder dergleichen ausgerüstet ist, dadurch gekennzeichnet, daß die Vorrichtung einen Speicher für Druckluft, eine Steuerungseinheit für die Betätigung der Hubkolbenstange, einen elektrischen Energiespeicher und einen Sender zur Übertragung der ermittelten Daten an einen außerhalb des Fahrzeuges angeordneten Empfänger umfaßt.

2. Vorrichtung nach Anspruch 1, dadurch gekennzeichnet, daß die Hubkolbenstange hohl ausgebildet und innerhalb der Bohrung ein Wegemeßsystem integriert ist.

3. Vorrichtung nach Anspruch 1 bis 2, dadurch gekennzeichnet, daß in der Bohrung der Hubkolbenstange zur Messung des Hubweges eine Widerstandsmeßstrecke mit fest angeordnetem, an der Bohrungswand gleitenden Abnehmer angeordnet ist.

4. Vorrichtung nach Anspruch 1 bis 3, dadurch gekennzeichnet, daß der zur Verbindung mit dem Bremspedal oder dergleichen bestimmte Hubstangenkopf mit einer Kraft- bzw. Druckmeßeinrichtung und einen Berührungskontaktschalter versehen ist.

5. Vorrichtung nach Anspruch 1 bis 4, dadurch gekennzeichnet, daß in der Vorrichtung eine programmierbare Steuerung zur Bestimmung der Anzahl und Zeitdauer der Hubvorgänge angeordnet ist.

6. Vorrichtung nach Anspruch 1 bis 5, dadurch gekennzeichnet, daß die Steuerungseinheit für die Betätigung der Hubkolbenstange Magnetventile umfaßt, die zur Steuerung der Druckluft als Mehrwegeventile ausgebildet sind.

7. Vorrichtung nach Anspruch 1 bis 6, dadurch gekennzeichnet, daß zwischen dem Druckluftvorrats- und -arbeitsraum ein Druckminderventil, vorzugsweise in Strömungsrichtung vor den Mehrwegeventilen, angeordnet ist.

8. Vorrichtung nach Anspruch 1 bis 7, dadurch gekennzeichnet, daß Meßumformer für die Meßsignale in die Vorrichtung integriert sind.

9. Vorrichtung nach Anspruch 1 bis 8, dadurch gekennzeichnet, daß an stationärer Stelle ein Richtempfänger vorgesehen ist.

10. Vorrichtung nach Anspruch 1 bis 9, dadurch gekennzeichnet, daß ein stationärer Rundumempfänger für den Empfang der Signale und ein stationärer Richtempfänger zur Identifizierung der eine Identifizierungsstelle durchlaufenden Vorrichtungen vorgesehen ist.
